# DEMANDE DE BREVET EUROPEEN

(11) **EP 1 965 342 A1**
(43) Date de publication de la demande: **03.09.2008**
(21) Numéro de dépôt: 07103102.5
(22) Date de dépôt: 27.02.2007
(51) Int. Cl.: G06Q 20/00, H04N 7/167, H04N 5/00

(54) **Procédé pour effectuer une transaction entre un module de paiement et un module de sécurité**

(71) Demandeur: Nagracard S.A., 1033 Cheseaux-sur Lausanne (CH)
(72) Inventeur: Kudelski, Henri, 1071, Chexbres (CH)
(74) Mandataire: Leman Consulting S.A.

(57) **Abrégé**

La présente invention concerne un procédé pour effectuer une transaction entre un module de paiement et un module de sécurité lié à une unité d'utilisateur. Ce procédé est caractérisé en ce qu'il comporte les étapes suivantes :
• introduction au moyen d'un dispositif d'introduction, d'un identifiant représentatif de la transaction à effectuer;
• génération par l'unité d'utilisateur, d'un message de commande contenant au moins un code représentatif de ladite transaction;
• envoi dudit message de commande audit module de paiement;
• vérification dans ledit module de paiement s'il est habilité à effectuer la transaction souhaitée;
• si le module de paiement est habilité à effectuer cette transaction, réalisation de la transaction, mémorisation dans ledit module de paiement du résultat de la transaction et génération par le module de paiement d'un code de déblocage correspondant à la transaction souhaitée et au module de sécurité concerné;
• envoi dudit code de déblocage au module de sécurité;
• enregistrement de la transaction dans ledit module de sécurité.

## Description

### DOMAINE TECHNIQUE

La présente invention concerne la sécurisation de transactions entre deux modules d'un utilisateur, l'un des modules étant un module de paiement tel que par exemple une carte prépayée et l'autre module étant un module de sécurité en charge du contrôle de l'accès à des données à accès conditionnel. Un tel procédé peut notamment être appliqué au domaine de la télévision à péage, à l'achat d'événements ou de fichiers tels que des films, des matchs de sport, des fichiers musicaux, des applications logicielles ou autres.

### TECHNIQUE ANTERIEURE

Dans les applications dans lesquelles un utilisateur souhaite accéder à des données à accès conditionnel, essentiellement deux principes sont mis en oeuvre pour autoriser cet accès. Selon l'un d'eux, le droit d'accès est donné sous la forme d'un abonnement. Dans ce cas, l'utilisateur paie généralement un forfait qui lui donne le droit d'accéder à toute une série d'évènements, sans que le prix à payer ne tienne compte des événements réellement consommés.

Selon un autre principe, l'utilisateur doit acquérir un droit pour les différents événements auxquels il souhaite avoir accès. Ceci est notamment le cas, dans le domaine de la télévision à péage, de la vidéo à la demande ou lorsque des événements sont commandés sous forme d'achats impulsifs. Dans une telle situation, l'utilisateur paie généralement une somme dépendant de sa consommation d'événements.

Les sommes à payer peuvent être débitées d'un compte d'un utilisateur inscrit ou être soustraites d'un crédit mémorisé dans un module de sécurité de l'utilisateur par exemple. Cela signifie que cet utilisateur doit nécessairement être inscrit avant de pouvoir bénéficier de ce service.

Dans certaines applications, il n'est pas souhaitable de forcer l'utilisateur à donner les références d'un compte bancaire par exemple. On peut souhaiter mettre à disposition des utilisateurs, des modules de paiement sous forme de cartes prépayées qui donnent à ces utilisateurs le droit d'accéder à un contenu déterminé dont la "valeur" correspondant au maximum au prix d'achat de la carte prépayée. Ceci permet notamment une bonne gestion par l'utilisateur du crédit consommé.

La difficulté de ce genre de systèmes est de transférer de façon sûre un crédit ou un droit depuis le module de paiement vers un module de sécurité adapté.

Dans les systèmes connus, par exemple dans le domaine de la téléphonie portable, il est possible de charger un crédit au moyen d'une carte prépayée. Dans ce genre d'application, un message du type sms (short message system) est envoyé à un centre de gestion, ce message contenant un numéro unique d'identification. Par définition, lorsque le message est envoyé au centre de gestion au moyen d'un téléphone, ce centre est en mesure d'en identifier la provenance, puisqu'il connaît le numéro de téléphone d'où vient ce message. Le centre de gestion vérifie l'authenticité du message et renvoie un code de déblocage en cas de message authentique. Ce code de déblocage a pour effet de charger le crédit dans le téléphone. Le numéro unique est ensuite éliminé de sorte que l'envoi ultérieur du même numéro ne créditera pas le montant une deuxième fois.

Ce type de procédure ne fonctionne pas dans toutes les applications. En particulier dans le domaine de la télévision à péage, lorsqu'un utilisateur souhaite obtenir un montant correspond à un événement particulier, le procédé tel que décrit ci-dessus n'est pas en mesure de gérer une telle demande. En effet, lorsqu'un crédit est attribué à une unité d'utilisateur déterminée, il est important de s'assurer qu'un débit correspondant a été effectué sur un module de paiement. De plus, il faut que le module débité soit bien en lien avec le module crédité.

Dans les cartes utilisées dans la téléphonie, le montant n'est en fait pas débité sur la carte prépayée. En réalité, la carte sert uniquement de support pour inscrire le numéro à envoyer au centre de gestion, mais ne comporte aucune possibilité de gérer un montant.

Ce type de systèmes ne peut pas être utilisé pour la gestion de crédit dans le domaine de la télévision à péage du fait que, dans les systèmes adaptés à la téléphonie, l'autorisation est soit donnée, soit refusée.

Dans le cadre d'un module de paiement capable de gérer un crédit, il est important, lors de l'attribution d'un crédit à un module de sécurité, de s'assurer qu'un débit correspondant a été effectué sur le module de paiement, de façon à éviter les fraudes. De même, il est important que le module débité soit en lien avec le module crédité pour éviter qu'un crédit soit attribué à une personne non autorisée.

Il faut donc lier les deux cartes de façon sûre et créditer le module de sécurité si et seulement si la carte prépayée a bien été débitée.

Les procédés actuels ne permettent pas d'assurer une sécurité optimale lors de ce genre de transactions.

### EXPOSE DE L'INVENTION

La présente invention se propose de pallier les inconvénients des procédés de l'art antérieur en réalisant un procédé dans lequel il est possible de gérer de façon efficace et sûre, l'attribution d'un crédit à un module de sécurité et le débit d'un montant correspondant dans un module de paiement.

Selon ce procédé, un utilisateur disposant d'un module de sécurité est en mesure de requérir un crédit ou des droits associés à un événement notamment. Dans le cas d'un crédit, le procédé permet de s'assurer qu'un montant n'est attribué à un module de sécurité que si un montant correspondant a été débité d'un module de paiement. Dans le cas d'un droit, ce droit est généralement associé à un montant. Le procédé de l'invention permet de garantir que le droit n'est pas attribué au module de sécurité si un montant correspondant n'a pas été débité du module de paiement.

Dans le procédé de l'invention, on établit une communication entre un module de sécurité lié à une unité d'utilisateur et un module de paiement acquis par cet utilisateur. La communication peut se faire de façon bidirectionnelle entre le module de sécurité et le module de paiement ou de façon monodirectionnelle, du module de paiement au module de sécurité, en fonction du mode de réalisation choisi. L'une au moins des communications est faite en transitant par un centre de gestion, alors que l'autre communication, en cas d'échange bidirectionnel est faite soit au niveau local c'est-à-dire dans l'unité d'utilisateur, soit par l'intermédiaire du centre de gestion.

La communication entre les modules permet d'une part d'envoyer une requête concernant la transaction à effectuer et d'autre part de recevoir un code relatif à cette transaction, pour autant que les conditions pour recevoir ce code sont remplies.

Le but de l'invention est atteint par un procédé pour effectuer une transaction entre un module de paiement et un module de sécurité lié à une unité d'utilisateur, ce procédé étant caractérisé en ce qu'il comporte les étapes suivantes :
- introduction au moyen d'un dispositif d'introduction, d'un identifiant représentatif de la transaction à effectuer;
- génération par l'unité d'utilisateur, d'un message de commande contenant un code représentatif de ladite transaction et un identifiant représentatif du module de sécurité demandant la transaction;
- envoi dudit message de commande audit module de paiement;
- vérification dans ledit module de paiement s'il est habilité à effectuer la transaction souhaitée;
- si le module de paiement est habilité à effectuer cette transaction, réalisation de la transaction, mémorisation dans ledit module de paiement du résultat de la transaction et génération par le module de paiement d'un code de déblocage correspondant à la transaction souhaitée et au module de sécurité concerné;
- envoi dudit code de déblocage au module de sécurité;
- enregistrement de la transaction dans ledit module de sécurité.

Les buts de l'invention sont également atteints par un procédé pour effectuer une transaction entre un module de paiement et un module de sécurité lié à une unité d'utilisateur, ce procédé étant caractérisé en ce qu'il comporte les étapes suivantes :
- introduction au moyen d'un dispositif d'introduction, d'un identifiant représentatif de la transaction à effectuer;
- génération par le module de paiement, d'un message de commande contenant un code représentatif de ladite transaction et un identifiant représentatif du module de sécurité auquel est destiné la transaction;
- vérification dans ledit module de paiement s'il est habilité à effectuer la transaction souhaitée;
- si le module de paiement est habilité à effectuer cette transaction, réalisation de la transaction, mémorisation dans ledit module de paiement du résultat de la transaction et génération par le module de paiement d'un code de déblocage correspondant à la transaction souhaitée et au module de sécurité concerné;
- envoi dudit code de déblocage au module de sécurité;
- enregistrement de la transaction dans ledit module de sécurité.

### DESCRIPTION SOMMAIRE DES DESSINS

La présente invention et ses avantages seront mieux compris en référence aux figures annexées et à la description détaillée de modes de réalisation particuliers, dans lesquelles :
- les figures 1 à 4 représentent schématiquement les composants utilisés pour la mise en oeuvre de différentes variantes du procédé de l'invention;
- la figure 5 représente de façon détaillée, le procédé de transfert tel que représenté schématiquement par la figure 1; et
- la figure 6 représente de façon détaillée, le procédé de transfert tel que représenté schématiquement par la figure 2.

### MANIERES DE REALISER L'INVENTION

Dans la présente invention, il est supposé que l'utilisateur dispose d'un module de sécurité SC et d'un module de paiement. Le module de sécurité peut par exemple permettre à l'utilisateur d'accéder à certains événements. Le module de paiement est destiné par exemple à accéder à des événements auxquels le module de sécurité ne donne pas accès. Ce module de paiement peut par exemple contenir un montant que l'utilisateur peut employer librement pour accéder à n'importe quel événement jusqu'à concurrence du montant mémorisé. Le module peut également contenir des jetons (token) ou des droits pour un événement ou une série d'événements spécifiques ou pour une durée déterminée.

Le module de paiement n'est en principe pas prévu pour fonctionner seul, mais requiert la présence du module de sécurité pour fonctionner. De plus, il est prévu que le module de paiement soit initialisé et ne fonctionne pas sans cette initialisation. Cette étape d'initialisation fonctionne de la façon suivante :

Selon un premier mode de réalisation de l'invention, l'utilisateur dispose d'un module de sécurité SC lui donnant droit à l'accès à certains événements. Il dispose également d'un module de paiement ayant les fonctions indiquées ci-dessus. Dans ce mode de réalisation, le module de paiement est activé lorsqu'il est introduit dans un lecteur de l'unité multimédia. Pour effectuer cette étape d'activation, un centre de gestion envoie de façon régulière, des messages de gestion EMM.

Le centre de gestion envoie un message d'autorisation EMM donnant comme instruction de créer une clé de déblocage. Cette clé de déblocage est formée d'au mois un nombre aléatoire et une valeur monétaire, un jeton et/ou un droit. Le tout est chiffré par une clé de groupe Kg qui peut être commune à toutes les unités multimédia concernées ou à une partie d'entre elles.

A réception de la clé de déblocage, celle-ci est déchiffrée au moyen de la clé de groupe et le nombre aléatoire en est extrait. L'unité multimédia vérifie si ce nombre aléatoire a déjà été utilisé ou non. S'il a été utilisé, a clé de déblocage est rejetée. Si ce n'et pas le cas, le montant, le jeton et/ou le droit est extrait en vue de son utilisation selon le procédé de l'invention.

Selon une variante, l'activation de la carte de prépaiement se fait de la façon suivante : l'utilisateur téléphone au centre de gestion et indique des données d'identifications. Ces données sont vérifiées dans le centre de gestion. Si elles correspondent à une carte réelle, le centre de gestion prépare un message de gestion EMM, généralement spécifique au module de paiement. Ce message de gestion contient, comme dans le mode de réalisation précédent, une clé de déblocage. Cette clé est en principe chiffrée avec la clé spécifique au module de paiement concerné, contrairement au mode de réalisation précédent où elle est généralement chiffrée avec une clé globale.

Les données d'identification peuvent par exemple comporter un numéro correspondant à un événement, un numéro d'identification du module de paiement, ainsi qu'un code de vérification.

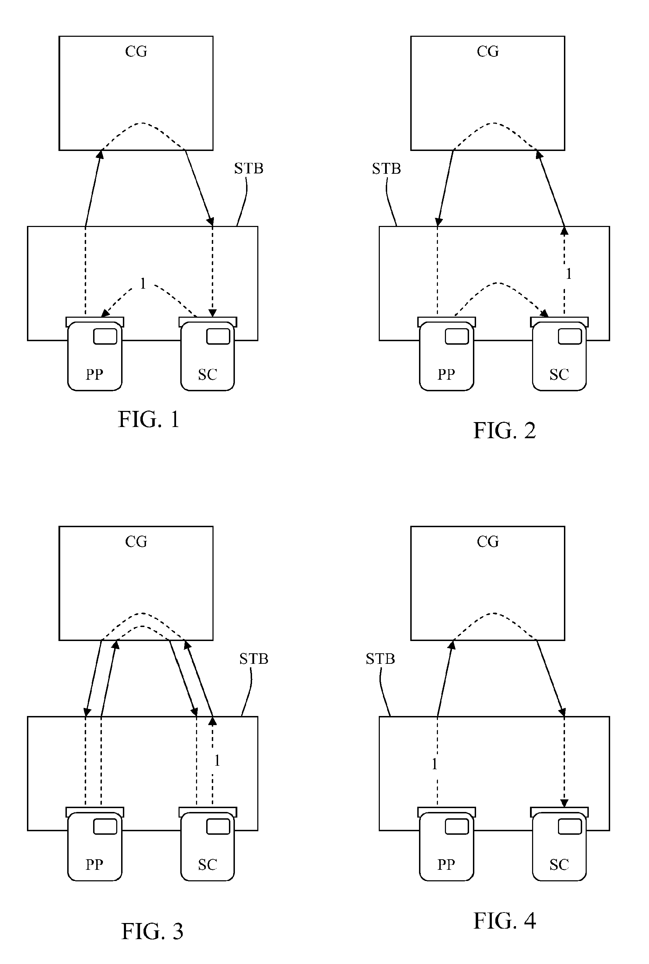

Les figures 1 à 6 illustrent de façon schématique le procédé de transfert selon l'invention ainsi que les éléments pour la mise en oeuvre de ce procédé de transfert entre un module de paiement PP et un module de sécurité SC, ces deux modules étant connectés à une unité d'utilisateur telle que par exemple un décodeur STB.

De façon bien connue de l'homme du métier, le module de sécurité SC peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Dans les modes de réalisation illustrés, le module de sécurité SC est représenté sous la forme d'une carte de type carte à puce. L'unité d'utilisateur est représentée comme ayant deux lecteurs agencés pour recevoir simultanément le module de sécurité SC et le module de paiement PP. Ces deux lecteurs permettant une communication directe entre le module de paiement et le module de sécurité. De cette façon, les données transférées entre ces deux modules sont transférées sans mémorisation dans l'unité d'utilisateur.

Si le module de sécurité a une forme autre qu'une carte, par exemple un circuit intégré, il est bien entendu possible d'utiliser une unité d'utilisateur ayant un seul lecteur de carte, celui-ci étant alors utilisé par le module de paiement PP.

Si le module de sécurité a la forme d'une carte, il est malgré tout également possible d'utiliser une unité multimédia n'ayant qu'un lecteur. Dans ce cas, les informations à transmettre d'un module à l'autre sont d'abord mémorisées dans l'unité d'utilisateur, le module ayant initié la communication étant ensuite retiré du lecteur pour laisser la place à l'autre module. Celui-ci prend les informations requises dans la mémoire de l'unité d'utilisateur.

La figure 1 représente les éléments permettant la mise en oeuvre de deux modes de réalisation du procédé de l'invention. Dans le premier mode de réalisation décrit, on suppose que l'utilisateur souhaite acquérir un crédit et que ces crédits peuvent être acquis par tranches de 10 unités. Le procédé selon ce mode de réalisation fonctionne de la manière suivante. Le décodeur STB génère un nombre aléatoire compris entre deux valeurs jouant le rôle de bornes, ces bornes définissant le montant du crédit demandé. A titre d'exemple, un nombre aléatoire compris entre 0 et 1 correspond à une demande de crédit de 10 unités, un nombre aléatoire compris entre 1 et 2 correspond à un crédit de 20 unités et ainsi de suite jusqu'à par exemple un crédit maximal autorisé de 100 unités par transaction.

Ce nombre aléatoire est transmis au module de sécurité SC qui le transmet au module de paiement PP. Cette transmission peut se faire en clair ou de façon chiffrée. Le crédit demandé est débité du module de paiement PP. Lorsque cette opération est réalisée, un message de quittance est formé, ce message contenant au moins une valeur permettant de déterminer le montant du crédit demandé et l'identifiant du module de paiement PP. Le module de paiement transfert ce message à un centre de gestion CG, sous forme chiffrée au moyen d'une clé spécifique à ce module de paiement. Ce message est déchiffré par le centre de gestion CG. Celui-ci détermine ensuite, d'après l'identifiant du module de paiement, quel est le module de sécurité SC qui y est associé. Ceci permet également de déterminer la clé ou la paire de clés à utiliser pour chiffrer le message au niveau du centre de gestion et pour permettre son déchiffrement au niveau du module de sécurité. Le centre de gestion génère ensuite un code de déblocage chiffré avec cette clé. Ce code de déblocage chiffré est envoyé au décodeur STB concerné, puis transmis au module de sécurité SC dans lequel il est déchiffré. Le code de déblocage peut contenir uniquement une information d'autorisation du crédit demandé ou inclure en outre la valeur du crédit ou un identifiant du module de sécurité concerné.

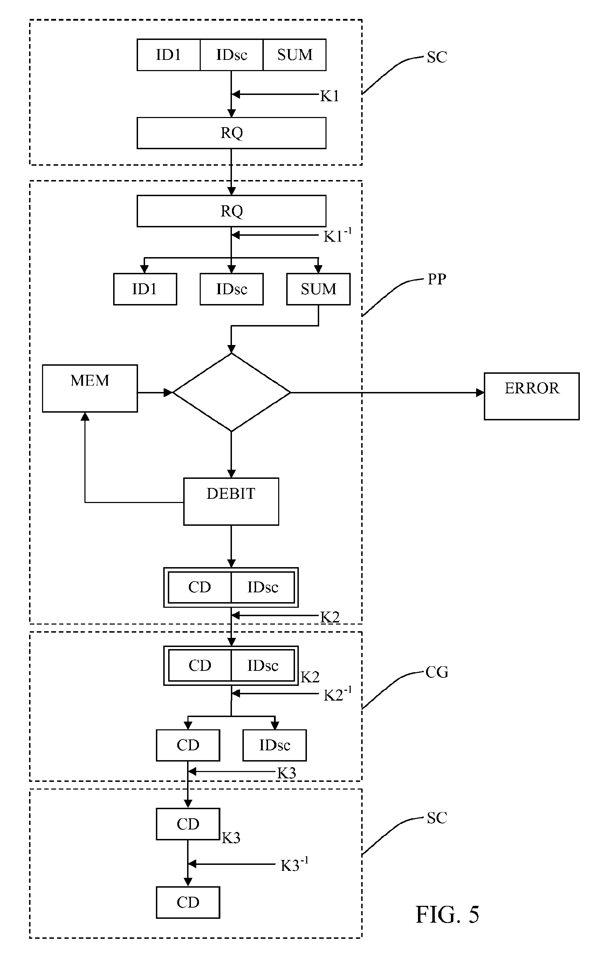

La figure 1 illustre également une deuxième variante de réalisation du procédé de l'invention, cette deuxième variante étant également expliquée en détail en référence à la figure 5. Dans ce mode de réalisation, supposons que l'utilisateur souhaite acquérir les droits de visualiser un événement particulier tel qu'un film. Cet événement est associé à un identifiant, noté ID1. L'identifiant peut en particulier être visible sur un guide de programme électronique EPG ou sur un support papier par exemple.

L'utilisateur introduit tout d'abord l'identifiant ID1 de l'événement qu'il souhaite acquérir ou le sélectionne à partir d'un guide de programme électronique (EPG; Electronic Program Guide). Pour ceci, il utilise par exemple un clavier alphanumérique ou une commande à distance coopérant avec une unité d'utilisateur. Il s'assure ensuite que le module de sécurité SC est bien connecté à l'unité d'utilisateur. Il est clair que selon le type de module de sécurité, celui-ci ne peut pas être retiré de l'unité d'utilisateur. Il est donc connecté en permanence.

L'unité d'utilisateur génère ensuite une requête RQ sous forme de message, par exemple lorsque l'utilisateur presse une touche de confirmation de commande, ce message contenant au moins le montant SUM correspondant à cet événement ou un dérivé de ce montant. Ce message peut en outre contenir de façon optionnelle l'identifiant ID1 de l'événement commandé. Selon un mode de réalisation préféré, le message contient également un identifiant IDsc du module de sécurité SC ayant émis la requête ou un numéro d'identification.

Le message est chiffré au moyen d'une clé K1 connue du module de sécurité. Ce message chiffré est transmis au module de paiement PP.

Ce module de paiement dispose également de la clé K1 ou, dans le cas d'une paire de clé asymétriques, de la clé correspondante, notée également K1 pour des raisons de simplification. Il est également possible d'ajouter un code de vérification afin d'éviter des problèmes dus à des éventuelles erreurs de transmission.

Le message est ensuite déchiffré par le module de paiement PP au moyen de la clé correspondante. Le montant SUM est extrait du message déchiffré. Le module de paiement PP vérifie si le montant contenu dans le message est inférieur ou égal au solde mémorisé dans le module de paiement. Si tel n'est pas le cas, le montant n'est pas débité et un message d'erreur est renvoyé au centre de gestion.

Si au contraire, le solde est suffisant, le montant SUM est débité du solde, éventuellement après d'autres vérifications telles que des vérifications liées au contrôle parental ou à d'autres droits liés à l'événement ou au module de sécurité. Le nouveau solde est mémorisé dans le module de paiement PP.

Lorsque cette opération de débit est effectuée, une quittance est générée. Cette quittance prend la forme d'un code de déblocage CD chiffré au moyen d'une clé K2 connue du module de paiement PP et du centre de gestion CG. La quittance contient également une information permettant d'identifier le module de sécurité qui a émis la requête. Cette information est typiquement l'identifiant IDsc de ce module de sécurité. La quittance est authentifiée de façon à éviter qu'une quittance frauduleuse puisse être transmise au module de sécurité et délivrer un crédit de façon indue.

La quittance est envoyée au centre de gestion CG dans lequel elle est déchiffrée. Le centre de gestion traite donc le message de quittance de façon à déterminer quel est le module de sécurité SC qui a émis la requête et à obtenir le code de déblocage.

Du fait que le centre de gestion connaît l'émetteur de la requête, il peut déterminer quelle est la clé à utiliser pour chiffrer un message a destination de ce module. Il chiffre donc le code de déblocage grâce à une clé K3 du module de sécurité SC concerné et envoie ce code de déblocage chiffré à ce module. Celui-ci peut donc le déchiffrer et en extraire le code de déblocage CD. Ce dernier est alors utilisé pour permettre l'accès au contenu requis, cet accès pouvant se faire de différentes manières. L'une des manières possibles est que le code de déblocage est une clé permettant d'accéder à des messages de contrôle ECM ou à des messages de gestion EMM.

Dans ce mode de réalisation, le module de sécurité SC et le module de paiement PP peuvent partager un secret commun, qui est la clé K1 dans le cas présent. Il est tout à fait possible de prévoir que plusieurs ou tous les modules de paiement d'un lot déterminé partagent la même clé K1. En effet, même si la requête chiffrée est envoyée à un module de paiement autre que celui auquel il est destiné, le fait que l'identifiant est intégré dans la requête assure que le code de déblocage sera transmis au module de sécurité correct.

Il est également possible de détecter de façon automatique le module de sécurité ayant émis la requête, sans que l'identifiant ne doive être introduit par l'utilisateur.

Le code de déblocage n'est envoyé qu'après débit du montant du module de paiement, de sorte qu'un même message de quittance ne peut pas être utilisé plusieurs fois sans que le débit correspondant soit effectué.

Dans la description ci-dessus, il est indiqué que le module de sécurité requiert un événement particulier ou un groupe d'événements, indiqué par un identifiant ID1 contenu dans la requête. II est également possible de ne pas requérir un événement particulier, mais plutôt un montant par exemple. Ce montant pourrait ensuite être utilisé par le module de sécurité pour accéder à n'importe quel événement. Dans ce cas, le module de paiement fait office de porte-monnaie électronique. Ceci ne change pas le principe du procédé, puisqu'il suffit de ne pas envoyer d'identifiant de l'événement, mais uniquement le montant SUM requis.

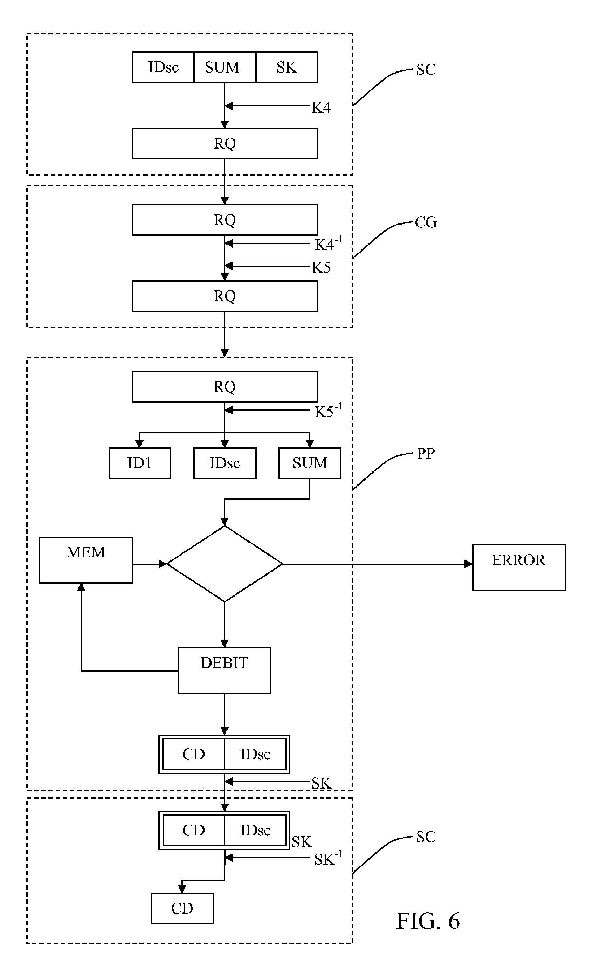

Les figures 2 et 6 illustrent une variante du procédé de l'invention dans laquelle le module de sécurité envoie une requête au centre de gestion. Dans l'exemple choisi, la requête n'est pas faite pour un événement particulier, mais pour un montant déterminé. Cette requête contient donc un montant SUM et une indication IDsc permettant de déterminer quel est le module de sécurité faisant cette requête. Dans une variante de l'invention, cette requête contient également une clé de session SK, dont l'utilité est expliquée ci-dessous. L'ensemble de ces éléments peut être chiffré au moyen d'une clé K4 connue du centre de gestion CG. Le message est envoyé sous cette forme au centre de gestion.

Celui-ci déchiffre le message, le cas échéant, au moyen de la clé K4, puis le rechiffre au moyen d'une clé K5, connue du module de paiement associé au module de sécurité qui a émis la requête. Le message ainsi chiffré est envoyé au module de paiement qui le déchiffre en utilisant la clé K5. Ce déchiffrement permet d'obtenir en particulier l'information concernant l'événement demandé et son coût, ce qui permet d'effectuer une vérification et de débiter le montant requis si le solde mémorisé dans le module de paiement est suffisant. Le déchiffrement permet également de recevoir la clé de session émise par le module de sécurité. Cette clé est utilisée pour chiffrer le code de déblocage CD et l'envoyer au module de sécurité. Ce dernier dispose bien entendu de la clé de session, ce qui lui permet de déchiffrer le code de déblocage et d'accéder au contenu requis.

Dans une variante dans laquelle la requête est destinée à un événement particulier ou un groupe d'événements, il est possible de transmettre dans cette requête, le montant correspondant à l'événement souhaité. Il est également possible de ne pas transmettre le montant dans cette requête, mais de laisser au centre de gestion le soin d'associer l'événement au montant. Ceci peut en particulier être intéressant lorsque le montant pour un même événement varie en fonction de droits spécifiques au module de sécurité qui émet la requête.

Selon une autre variante, il est possible d'utiliser en lieu et place de la clé de session, une clé commune au module de sécurité et au module de paiement. Toutefois, l'utilisation d'une clé de session présente l'avantage que le module de sécurité et le module de paiement n'ont pas besoin de partager un secret commun pour pouvoir communiquer.

La clé de session est utilisée pour une seule communication, puis elle est supprimée. Ceci évite les risques liés à une utilisation abusive des clés.

Dans le mode de réalisation de la figure 3, la communication du module de sécurité SC au module de paiement PP se déroule de manière similaire à ce qui est décrit en référence aux figures 2 et 5. La requête est envoyée au centre de gestion CG, cette requête étant éventuellement chiffrée par une clé connue de ce centre de gestion. Le message transmis à ce centre de gestion ne contient toutefois en principe pas de clé de session. Le message est déchiffré par le centre de gestion, puis rechiffré par ce dernier au moyen d'une clé connue du module de paiement PP. Il est ensuite envoyé à ce module de paiement.

Le module de paiement déchiffre le message reçu, vérifie si le solde est suffisant et, le cas échéant, débite le montant.

Le code de déblocage n'est pas transmis de façon directe du module de paiement au module de sécurité SC. Ce code de déblocage CD est d'abord envoyé du module de paiement PP au centre de gestion CG , ce code étant chiffré. Le code est ensuite déchiffré dans le centre de gestion, puis rechiffré avant d'être transmis au module de sécurité SC. Le code est alors déchiffré de façon à pouvoir être utilisé pour accéder au contenu requis.

Ce mode de réalisation présente l'avantage qu'il est possible de transmettre des informations entre le module de sécurité et le module de paiement sans qu'il soit nécessaire de partager un secret commun. Toutes les communications entre le module de sécurité SC et le module de paiement PP transitent par le centre de gestion CG.

Dans le mode de réalisation illustré par la figure 4, le module de sécurité SC n'initie pas la communication. Celle-ci est initiée par le module de paiement PP. Ceci peut se faire en particulier, mais pas uniquement, dans le cas où un crédit est transféré du module de paiement au module de sécurité.

Dans cette réalisation, un code de déblocage CD contenant le crédit SUM à transférer ainsi qu'un identifiant IDsc du module de sécurité auquel ce crédit doit être transféré est généré par le module de paiement. Ce code de déblocage est chiffré par une clé connue du centre de gestion et le message chiffré est envoyé à ce centre de gestion. Celui-ci le déchiffre et en extrait l'identifiant IDsc du module de sécurité concerné. Il rechiffre ensuite le code de déblocage CD au moyen d'une clé spécifique au module de sécurité, puis lui envoie ce code chiffré. Le module de sécurité le déchiffre et peut donc utiliser le code de déblocage pour créditer le montant requis.

Ce mode de réalisation n'est pas optimal du point de vue de la sécurité, du fait qu'il n'y a pas de communication entre le module de sécurité et le module de paiement, mais il pourrait être utilisé dans des applications dans lesquelles la sécurité n'est pas primordiale.

Dans les différents modes de réalisation décrits, il est supposé que la communication entre le module de sécurité et le module de paiement peut se faire de façon directe, soit que l'unité multimédia dispose de deux lecteurs, soit que le module de sécurité est intégré à l'unité multimédia. Dans la pratique, si les modules de sécurité et de paiement sont réalisés sous le forme de cartes à puce et que l'unité multimédia ne dispose que d'un lecteur de carte, il est possible de mémoriser le contenu des messages dans une mémoire de l'unité multimédia, puis de placer le module requis dans le lecteur et de transférer le contenu de la mémoire au module qui est inséré dans le lecteur en ce moment.

## Revendications

1. Procédé pour effectuer une transaction entre un module de paiement et un module de sécurité lié à une unité d'utilisateur, ce procédé étant **caractérisé en ce qu'**il comporte les étapes suivantes :
• introduction au moyen d'un dispositif d'introduction, d'un identifiant représentatif de la transaction à effectuer;
• génération par l'unité d'utilisateur, d'un message de commande contenant au moins un code représentatif de ladite transaction;
• envoi dudit message de commande audit module de paiement (PP);
• vérification dans ledit module de paiement s'il est habilité à effectuer la transaction souhaitée;
• si le module de paiement est habilité à effectuer cette transaction, réalisation de la transaction, mémorisation dans ledit module de paiement du résultat de la transaction et génération par le module de paiement d'un code de déblocage (CD) correspondant à la transaction souhaitée et au module de sécurité concerné;
• envoi dudit code de déblocage au module de sécurité (SC);
• enregistrement de la transaction dans ledit module de sécurité.

2. Procédé selon la revendication 1, **caractérisé en ce que** l'étape d'envoi dudit message de commande audit module de paiement (PP) se fait par transfert direct dans l'unité d'utilisateur (STB), du message de commande au module de paiement.

3. Procédé selon la revendication 1, **caractérisé en ce que** l'étape d'envoi dudit message de commande audit module de paiement (PP) comporte une étape de transfert du message de commande du module de sécurité (SC) à un centre de gestion (CG), puis de ce centre de gestion audit module de paiement (PP).

4. Procédé selon la revendication 1, **caractérisé en ce que** l'étape d'envoi dudit code de déblocage au module de sécurité (SC) se fait par transfert direct dans l'unité d'utilisateur (STB), du code de déblocage (CD) au module de sécurité.

5. Procédé selon la revendication 1, **caractérisé en ce que** l'étape d'envoi dudit code de déblocage (CD) au module de sécurité comporte une étape de transfert du code de déblocage du module de paiement (PP) à un centre de gestion (CG), puis de ce centre de gestion audit module de sécurité (SC).

6. Procédé selon la revendication 2, **caractérisé en ce que** ledit message de commande est mémorisé dans l'unité d'utilisateur (STB) avant d'être transmis au module de paiement (PP).

7. Procédé selon la revendication 4, **caractérisé en ce que** ledit code de déblocage (CD) est mémorisé dans l'unité d'utilisateur (STB) avant d'être transmis au module de sécurité (SC).

8. Procédé selon la revendication 1, **caractérisé en ce que** la transaction concerne au moins l'un des éléments choisis parmi un droit d'accès à un événement, un droit d'accès à des données ou un crédit.

9. Procédé selon la revendication 1, **caractérisé en ce que** la transaction est mémorisée également dans le module de paiement (PP).

10. Procédé pour effectuer une transaction entre un module de paiement et un module de sécurité lié à une unité d'utilisateur, ce procédé étant **caractérisé en ce qu'**il comporte les étapes suivantes :
• introduction au moyen d'un dispositif d'introduction, d'un identifiant représentatif de la transaction à effectuer;
• génération par le module de paiement (PP), d'un message de commande contenant au moins un code représentatif de ladite transaction;
• vérification dans ledit module de paiement (PP) s'il est habilité à effectuer la transaction souhaitée;
• si le module de paiement est habilité à effectuer cette transaction, réalisation de la transaction, mémorisation dans ledit module de paiement du résultat de la transaction et génération par le module de paiement d'un code de déblocage (CD) correspondant à la transaction souhaitée et au module de sécurité (SC) concerné;
• envoi dudit code de déblocage (CD) au module de sécurité (SC);
• enregistrement de la transaction dans ledit module de sécurité.

11. Procédé selon la revendication 10, **caractérisé en ce que** l'étape d'envoi dudit code de déblocage (CD) au module de sécurité (SC) comporte une étape de transfert du code de déblocage du module de paiement à un centre de gestion (CG), puis de ce centre de gestion audit module de sécurité.

12. Procédé selon la revendication 10, **caractérisé en ce que** la transaction concerne au moins l'un des éléments choisis parmi un droit d'accès à un événement; un droit d'accès à des données ou un crédit.
